# EUROPÄISCHE PATENTSCHRIFT

(11) **EP 1 588 963 B1**
(45) Veröffentlichungstag und Bekanntmachung des Hinweises auf die Patenterteilung: **09.09.2009**
(21) Anmeldenummer: 05008610.7
(22) Anmeldetag: 20.04.2005
(51) Int. Cl.: B65G 53/52

(54) **Verfahren und Vorrichtung zur pneumatischen Förderung von Schüttgut**
Method and apparatus for the pneumatic conveying of bulk material
Méthode et dispositif pour le transport pneumatique de produit en vrac

(30) Priorität: 24.04.2004 DE 102004020100
(43) Veröffentlichungstag der Anmeldung: 26.10.2005
(73) Patentinhaber: MOTAN Materials Handling GmbH, 88250 Weingarten (DE)
(72) Erfinder: Heep, Dieter, 88368 Bergatreute (DE); Heep, Tobias, 88368 Bergatreute (DE); Wittreck, Hubert, 88250 Weingarten (DE)
(74) Vertreter: Riebling, Peter

(56) Entgegenhaltungen:
- WO-A-03/086912
- DE-A1- 3 546 197
- DE-B- 1 197 384
- FR-A- 1 451 250
- US-A- 2 769 544

## Beschreibung

Die Erfindung betrifft ein Verfahren und eine Vorrichtung zum Einspeisen von Schüttgut in eine Dichtstromförderleitung nach dem Oberbegriff des Anspruches 1.

Ein eingangs genanntes Verfahren und eine dazugehörende Vorrichtung sind mit der eigenen EP 0 692 411 B1 bekannt geworden. Diese bekannte Technik verwendet ein Verfahren zur pneumatischen Förderung von Schüttgut, wobei dieses in einer Rohrleitung von einem Aufgabeort mittels einer Gasströmung zu einem Empfangsort transportiert wird, wobei das Schüttgut im Dichtstrom mit definierter Geschwindigkeit durch Erzeugen eines Pfropfens in der Rohrleitung diese teilbefüllt und nach Verschließen der Eintrittsöffnung der Rohleitung mittels eines Einlaufverschlussventils diese durch Überdruck ganz oder teilentleert und wobei durch ein dauerndes Wiederholen dieses Vorgangs ein quasikontinuierlicher Massenstrom vom Aufgabeort zum Empfangsort hergestellt werden kann.

In der EP 0 692 441 B1 wird das sogenannte Pumpflow-Verfahren offenbart, welches durch Anordnung eines Teilvakuumserzeugers die Rohleitung im Saug-Dichtstrombetrieb teilbefüllt und durch Umschalten im Druckbetrieb entleert, und somit auf Zellenradschleusen bzw. Druckbehälter verzichtet werden kann. Mit zwei Ansaugleitungen nebeneinander in double action mode lassen sich quasikontinuierlich Container und Bigbags entleeren.

Nachteilig ist hierbei, dass die ansaugbare Schüttgutmenge von der Höhe des Teilvakuums, dem Schüttgutverschiebefaktor und dem Verhältnis Rohrdurchmesser/erzielbare Befülllänge abhängt und somit der erreichbare Massenstrom zu wünschen übrig lässt.

Vorrichtung dieser Art werden benutzt um z. B. geperlten Ruß in eine bypassgestützte Förderleitung einzuspeisen, welcher dann mit Gasendgeschwindigkeit zwischen 4 und 8 m/s vom Einspeiseort bis zum Empfangsort mit minimalem Perlenbruch transportiert wird. Nach dem Stand der Technik wurden bisher Dichtstrom-Zellenradschleusen und Einzel/Doppeldruckgefäße eingesetzt bzw. miteinander kombiniert.

Die seit Jahrzehnten eingesetzten Schneckenpumpen sind mit einer hohen KW-Antriebsleistung versehen, um den Schüttgutpfropfen vor der Verschlusskappe zwischen Schneckenwelle und Förderleitung zu überwinden, die vom Förderdruck zugehalten wird und werden hauptsächlich für Mineralstoffe eingesetzt. Empfindliche Schüttgüter wie geperlter Ruß würden dort zerstört. Die drucklose Förderschnecken-Technologie mit Standard-Trog- oder Rohrschnecken wird jedoch bevorzugt, um geperlten Ruß von den Siloausläufen zu den Druckbehältern oder Zellenradschleusen zu transportieren und/oder Wiegebehälter über den Gummiknetern mit Rußkomponenten zu versorgen.

Die DD 267 850 zeigt, dass auch Förderschnecken ohne Gegenklappe zum Einschleusen von Schüttgut benutzt werden können, wenn oberhalb des Schneckeneinlaufes ein Einschleusebehälter installiert wird. Die Schnecke dient nicht zur Überwindung einer Einschleusdruckdifferenz, die leckluftbehaftet wäre, sondern hat die Aufgabe die Beladung My, d. h. das Verhältnis von Schüttgut zu Förderluft (in kg) zu regeln, bzw. konstant zu halten.

In der DE 40 14 912 wird eine Technik beschrieben, wo mit Hilfe eines schraubenförmig vorgefertigten teilflexiblen Elementes bei entsprechender Drehrichtung förderunterstützend die Förderrohwand von Wandansatz freigehalten werden soll. Auch hier wird zum eigentlichen Füllen der Rohleitung die bekannte, übliche Druckbehältertechnologie vorgeschlagen.

Der Erfindung liegt deshalb ausgehend von der EP 0 692 441 B1 die Aufgabe zugrunde, ein Verfahren und eine Vorrichtung zu schaffen, welche (s) in der Lage ist, empfindliches Schüttgut, z. B. geperlter Ruß, in reproduzierbarer Menge bei jedem Zyklus in die Förderleitung in Form einer Teilbefüllung einzubringen, ohne dass ein Teilvacuumerzeuger verwendet werden muss, der bekanntlich schüttgutabhängig die Fülllänge der Ansaugstrecke begrenzt.

Zur Lösung der gestellten Aufgabe dient die technische Lehre des Anspruches 1.

Wesentliches Merkmal des erfindungsgemäßen Verfahrens ist, dass die aus der EP 0 692 441 B1 bekannte Pfropfenbildung in einer Teilstrecke der Förderleitung nun erfindungsgemäß durch einen mechanischen Längsförderer erfolgt.

Mit der gegebenen technischen Lehre ergibt sich der wesentliche Vorteil, dass nun auf eine Bildung eines Schüttgutpfropfens mittels eines Vacuumerzeugers und entsprechend hoher Luftleistungen verzichtet werden kann. Die Verwendung eines Vacuumerzeugers und entsprechend hoher Luftleistungen führte bei empfindlichen Schüttgut zu einer Beschädigung des Schüttgutes, weil diese unter hoher Reibung an der Rohrwandung der zu befüllenden Teilstrecke entlang geführt wurde.

Außerdem war die Länge des zu bildenden Schüttgutpfropfens sehr stark begrenzt, denn aufgrund der inneren Reibung im Material des Schüttgutpfropfens waren nur maximale Längen von etwa 4 bis 5 Meter möglich.

Durch die Verwendung eines mechanischen Längsförderers zur Bildung des Schüttgutpfropfens in einer Teilstrecke der Förderleitung ergibt sich nun der wesentlichen Vorteil, dass in dieser Teilstrecke der Schüttgutpfropfen auf schonende Weise hergestellt werden kann, ohne dass die Gefahr besteht, dass die empfindlichen Förderteilchen an der Wandung der Förderleitung entlang reiben und dort zerstört werden.

Wesentlich bei einer Vorrichtung zur mechanischen Herstellung eines solchen Schüttgutpfropfens ist, dass erfindungsgemäß als Längsförderer eine Förderschnecke verwendet wird, die in Längsrichtung ausgerichtet in der Förderleitung mit einem beträchtlichen Abstand zum Grund der Förderleitung angeordnet ist.

Daher wird dieser Längsförderer nicht als Rohrförderer verwendet, sondern als Fördermedium zum schonenden Auffüllen der Förderleitung in Längsrichtung.

Dies bedeutet, dass die Förderschnecke mit großem Abstand über dem Grund der Förderleitung angeordnet ist, um so das Absetzen des Materials am Grund der Förderleitung zu ermöglichen. Dies ist mit dem Vorteil verbunden, dass das Fördergut nicht als Vollpfropfen nach vorne in Richtung der Längsachse der Förderleitung verschoben wird, sondern dass eine nach und nach vor sich gehenden, zungenförmige Befüllung der Förderleitung aufgrund des Längsförderers geschieht.

Die Vorrichtung nach der Erfindung sieht deshalb eine Förderschnecke vor, welche im Durchmesser wesentliche kleiner als die übliche Dimensionierung Schnecke/Rohr-Trog ausgeführt ist und außerdem außermittig zum Förderrohr angebracht ist. Die ausgewählte Länge entspricht: erwünschter Massenstrom ist gleich wirksames Rohrvolumen mal Anzahl der Entleertakte pro Sekunde.

Erstaunlicherweise hat sich herausgestellt, wenn man in dieser Ausführung die Förderschnecke in Richtung stromab drehen lässt, dass sich die Förderleitung vom Zuführpunkt des Schüttgutes unterhalb der Schneckenwelle stromabwärts füllt, wobei der Massenstrom von der Drehzahl abhängt und die Rohrleitung ohne Pfropfen und der damit verbundenen Wandreibung und Perlenzerstörung gefüllt wird und das Schüttgut zunehmend selber die Trogwand bildet.

Beendet man die Befüllung bevor das Schüttgut das Ende der Schnecke erreicht und wechselt in den bypassgestützten Druckmodus, so lässt sich die von der Schnecke transportierte Schüttgutmenge problemlos wie bei Pumpflow in eine gewünschte Dichtstromförderung überfüllen.

Ein Vorteil des erfindungemäßen Verfahrens und der dazu gehörenden Vorrichtung ist, dass nun beliebig lange Schüttgutpfropfen mit dem erfindungsgemäßen neuen Längsförderer gebildet werden können. Aufgrund der notwendigen Lagerungen einer Förderschnecke ist es demgemäss vorgesehen, dass bei Schüttgutpfropfenlängen von mehr als 5 Meter derartige Längsförderer mit Zwischenlager verwendet werden oder auch mehrere Längsförderer hintereinander liegend angeordnet werden, um so über eine große Länge eine Pfropfenbefüllung der Teilstrecke der Förderleitung zu gewährleisten.

So ist es mit der Erfindung ohne weiteres möglich, Pfropfenlängen im Bereich zwischen 5 bis 20 Meter zu erzeugen, um so gesteuert diesen Pfropfen in einen Zielbehälter mit der nachfolgend geschalteten Dichtstrom-Bypass-Förderung zu bringen.

Die Erfindung wird deshalb nicht nur durch die Anordnung eines mechanischen Längsförderers in einem Teilstück der Förderleitung verwirklicht, sondern darüber hinaus noch durch an der Bodenseite des Rohrgefäßes des Längsförderers angeordnete Belüftungsrohre, die ein Absetzten und Anhaften des Fördergutes, insbesondere im Bodenbereich des Rohrgefäßes des Längsförderers verhindern. Damit wird die mechanischen Anhaftung des Fördergutes an der Innenseite des Rohrgefäßes unterbunden und der Pfropfen wird stets in einem gut fließfähigen Zustand gehalten.

Nachdem der Pfropfen über die gesamte Länge des Längsförderers hergestellt wurde, ist es deshalb ohne weiteres möglich, mit relativ geringer Luftleistung und geringem Überdruck den so locker im Rohrgefäß des Längsförderers gebildeten Pfropfen aus dem Rohrgefäß auszutreiben und in das übrige Teilstück der Förderleitung einzubringen.

Durch die Verdopplung der Installation erhält man ein Verfahren mit einer quasikontinuierlichen Dichtstromförderung, welches nur mit Hochdruckzellenradschleusen oder Doppeldruckgefäßen erreichbar ist, vermeidet aber Leckluft- bzw. Bauhöhenprobleme. Der mechanische Aufwand mit Schneckenwelle und Antriebsmotor ist weit geringer als die Befüllung mit einem filtergeschützten Teilvacuumerzeuger. Die Bypass-Unterstützung während der Befüllung entfällt komplett. Die Befüllung erfolgt also rein mechanisch, die Entleerung rein pneumatisch.

Legt man in einer Silobatterie die neue Vorrichtung in einen Kanal kleiner 50 cm Tiefe oder auf Erdgeschosslevel, spart man eine ganze Geschosshöhe sei es Etage oder Keller, insbesondere die häufigen Praxisprobleme mit dem Grundwasserspiegel bei Schüttgutcontainerentladeanlagen entfallen. Auch der Anschluss an die Schwerkraftschüttgutwagen der Bahn unter den Gleisen mit vernünftigen Entladeleistungen kann jetzt besser realisiert werden als bisher.

In einer Weiterbildung des erfindungsgemäßen Verfahrens sind Steuerungsvorrichtungen vorgesehen, welche die kontinuierliche Auffüllung des Rohrgefäßes des Längsförderers überwachen.

Eine Weiterbildung des erfindungsgemäßen Verfahrens sieht demgemäss vor, dass die Auffüllung des Pfropfens im Rohrgefäß des Längsförderers überwacht wird.

Nach einem weiteren Merkmal ist es vorgesehen, dass die Überwachung durch eine Wiegedose erfolgt, die am freien schwenkbaren Ende des Längsförderers angeordnet ist, um festzustellen, dass das Rohrgefäß des Längsförderers vollständig befüllt ist. Es darf in diesem Rohrgefäß nicht zu einem Überdruck oder einer Kompression des Fördergutes kommen und daher stellt die genannte Wiegedose eine vollständige, lockere Befüllung des Rohrgefäßes fest.

In einer anderen Ausgestaltung der Erfindung ist es vorgesehen, dass neben der Förderung im Längsförderer mit einer drehend angetriebenen Förderwendel noch zusätzlich ein Vibrationsförderer angeordnet ist. In diesem Ausführungsbeispiel ist dann das gesamte Rohrgefäß als Vibrationsförderer ausgebildet, d.h. das gesamte Rohrgefäß wird vibrierend in Längsrichtung des Rohrgefäßes angetrieben, um so noch eine bessere Verteilung des Schüttgutes im Rohrgefäß zu erreichen.

Eine bevorzugte Ausbildung der erfindungsgemäßen Vorrichtung sieht nun vor, dass eine Vielzahl von Aufgabebehältern in den Längsförderer in gegenseitigem Abstand einmünden.

Eine solche Ausführungsform ist insbesondere dann wichtig, wenn man als Fördergut einen zu entsorgenden Staub ansieht, der aus einem Entstaubungsfilter eines Kraftwerkes oder einer Müllverbrennungsanlage entsorgt werden muss.

Zu diesem Zweck sind an der Unterseite des Entstaubungsfilters in gegenseitigem Abstand zueinander eine Vielzahl von Entstaubungstrichtern angeordnet, deren Auslauf jeweils durch eine Absperrklappe verschließbar ist.

Durch entsprechende Wahl der Öffnung der einzelnen Absperrklappen kann nun das Rohrgefäß des Längsförderers gesteuert aufgefüllt werden.

Beispielsweise wird es in einem ersten Verfahrensschritt vorgesehen, dass in einer relativ kurzen Zeit alle Absperrklappen geöffnet werden, um so zunächst einmal den Boden des Rohrgefäßes aufzufüllen. Es werden dann alle Absperrklappen wieder geschlossen.

Danach werden zu vollständigen Befüllung des Rohrgefäßes beispielweise nur jeder zweite Entstaubungstrichter geöffnet, um so das Rohrgefäß vollständig zu befüllen und eine entsprechende lose Verteilung durch Drehantrieb des Längsförderers im Rohrgefäß zu erreichen.

Wenn das Rohrgefäß locker befüllt ist, werden die vorher geöffneten Auslässe der Entstaubungstrichter wieder geschlossen und der so fertig gestellte Pfropfen wird nun unter entsprechender Lufteinblasung in das Rohrgefäß in dem übrigen Teilbereich der Förderleitung eingeblasen und zu einem Zielbehälter gebracht.

Vorteil dieser Anordnung ist, dass man mit Hilfe des beschriebenen, mechanischen Längsförderers nun eine beliebig lange Pfropfenbildung erreicht, was bedeutet, dass ein Entstaubungsfilter über eine sehr große Länge gleichmäßig entleert werden kann, was beim Stand der Technik nur mit Hilfe von Druckgefäßen möglich war.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert ein Verfahrensschema zum Transport von Schüttgut von einem Aufgabebehälter in einen Zielbehälter;
- Figur 2:: der Längsförderer nach Figur 1 im Schnitt;
- Figur 3:: die Stirnansicht des Längsförderers nach Figur 2;
- Figur 4:: eine gegenüber Figur 1 verdoppelte Anordnung mit einer quasikontinuierlichen Dichtstromförderung;
- Figur 5:: die Vorrichtung nach Figur 1 mit Anordnung eines zusätzlichen Vibrationsförderers;
- Figur 6:: die Vorrichtung nach Figur 1 mit Anordnung einer zusätzlichen Wiegeeinrichtung;
- Figur 7:: eine Vervielfachung der Anordnung nach Figur 1 zur Herstellung eines langen Schüttgutpfropfens.

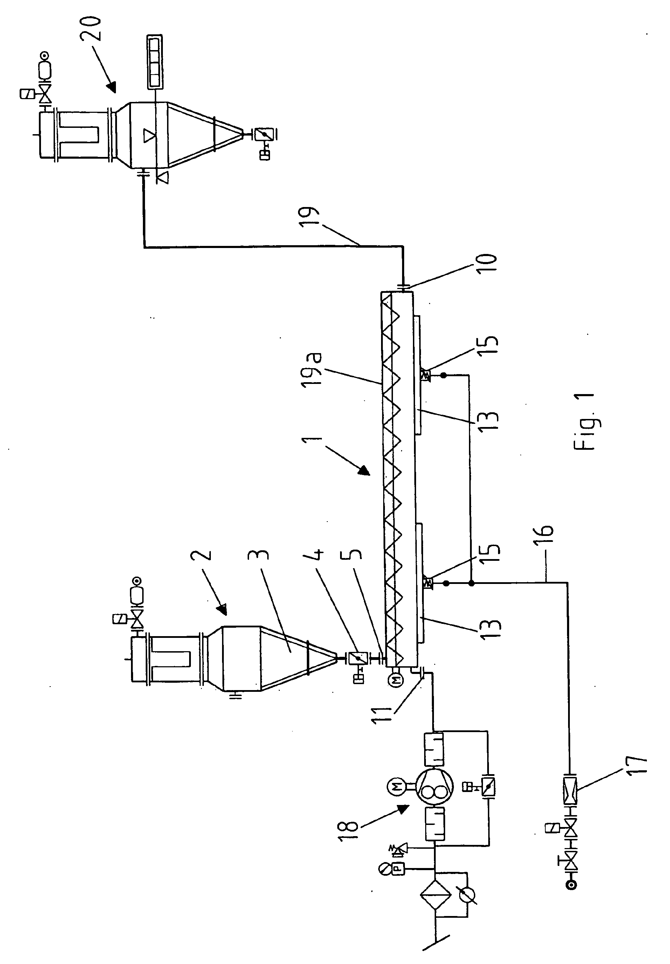

In Figur 1 ist allgemein eine Vorrichtung nach der Erfindung dargestellt, weil das zu transportierende, empfindliche Schüttgut 3 in einem Aufgabebehälter 2 lagert. Es soll in ein im Abstand davon angeordneten Zielbehälter 20 in Form einer Dichtstromförderung überführt werden.

Zu diesem Zweck ist eine Förderleitung 19, 19a vorgesehen, wobei erfindungsgemäß ein Teilstück dieser Förderleitung, nämlich die Förderstrecke 19a, als Längsförderer 1 ausgebildet ist.

Das zu transportierende Schüttgut 3 wird demgemäss über die geöffnete Absperrklappe 4 und einen zugeordneten Anschlussstutzen 5 in Pfeilrichtung 6 in den hinteren Bereich des Rohrgefäßes 12 des Längsförderers 1 aufgegeben.

Der Längsförderer besteht hierbei aus dem Rohrgefäß 12, in dessen Innenraum eine Schneckenwelle mit darauf befestigen Schneckenwendeln drehen über einem Getriebemotor 7 angetrieben ist.

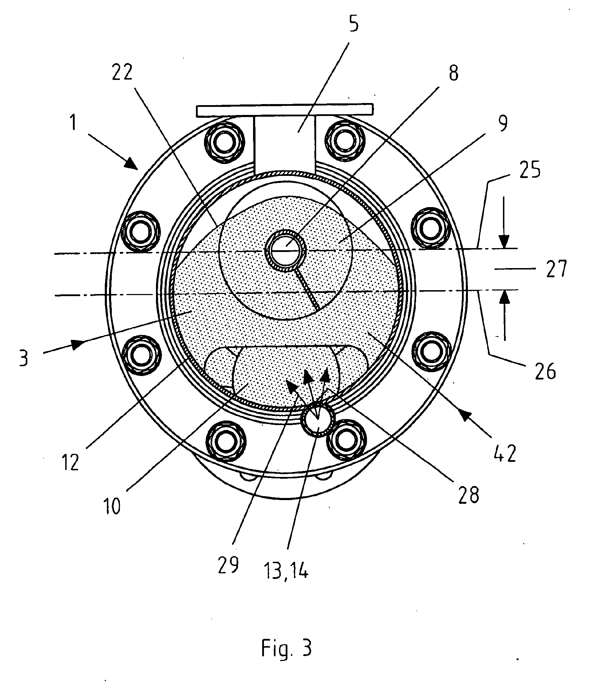

In dem beschriebenen Aufgabemodus ist die Schneckenwelle 8 noch nicht angetrieben, d.h. der Getriebemotor 7 steht still. Das Schüttgut 3 wird nun in Pfeilrichtung 6 zunächst in das hintere Ende des Rohrgefäßes 12 eingefüllt und bildet dort einen losen Schüttgutkegel, wie er etwa in Figur 3 dargestellt ist. Er hat die Füllkurve 22. Sobald das Rohrgefäß 12 im Bereich des Anschlussstutzens 5 fast gefüllt ist, wird der Getriebemotor 7 in Gang gesetzt, und das Schüttgut 3a mit der Füllkurve 22 wird in Längsrichtung transportiert, wobei die einzelnen Schneckenwendeln 9 dieses Schüttgut in Pfeilrichtung 41 nach unten abwerfen und im Bodenbereich des Rohrgefäßes 12 ablagern.

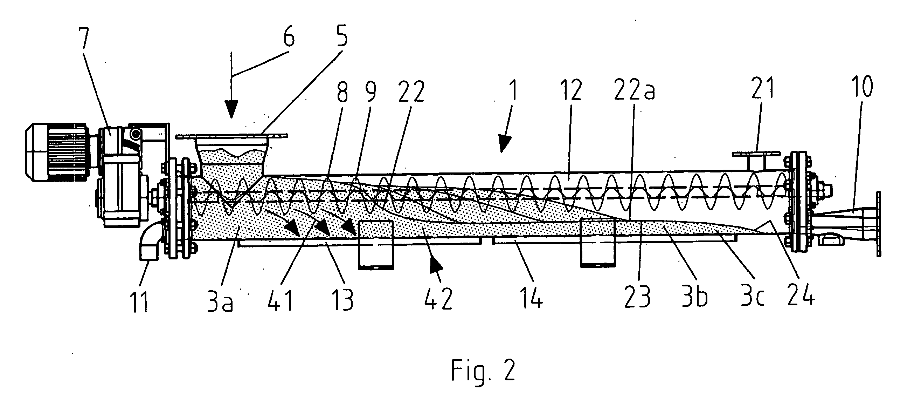

Es ergibt sich somit eine Verteilung des Schüttgutes 3a im Rohrgefäß entsprechend der in Figur 2 dargestellten länglichen Füllkurve 22.

Etwa im hinteren Drittel der Länge des Rohrgefäßes 12 geht diese Füllkurve 22 mit einer abfallenden Füllkante 22a in eine flachere Füllkurve 22 über, die unterhalb der Schneckenwendel 9 liegt und diese Füllkurve 23 endet wiederum mit einer flacheren Füllkante in eine noch flachere Füllkurve 24 am Auslassende des Rohrgefäßes 12. Dies ist in Figur 2 dargestellt.

Die dargestellten Füllkurven 22, 23, 24 bilden sich während des Betriebs der Schneckenwendel 9 und die Schneckenwelle 8 wird solange angetrieben, bis die Füllkante 22a das Ende des Rohrgefäßes in der Nähe des Auslasses 10 erreicht hat.

Der Schüttgutpfropfen ist somit vollständig hergestellt und soll nun aus dem Teilstück 19a, nämlich dem Längsförderer 1 ausgetrieben werden.

Zu diesem Zweck mündet an der Aufgabeseite des Längsförderers ein Lufteinlass 11, der gemäß Figur 1 mit einem Förderluftkompressor 18 verbunden ist.

Ferner sind an der Bodenseite des Rohrgefäßes 12 in Längsrichtung hintereinander angeordnete Belüftungsrohre 13, 14 vorgesehen, wie dies in Figur 3 dargestellt ist.

Die Belüftungsrohre 13, 14 sind über zugeordnete Bypassventile 15 mit einer Luftleitung 16 verbunden, die wiederum mit einem Luftvolumen-Regler 17 in Verbindung steht, über den eine gesteuerte Luftmenge in die Lüftungsrohre 13, 14 eingeblasen wird.

Zum Austreiben des locker in dem Rohrgefäß 12 einliegenden Pfropfens wird also sowohl eine Förderluft über den Lufteinlass 11 in das Rohrgefäß 12 eingeblasen und gleichzeitig werden die Belüftungsrohre 13, 14 mit Luft versorgt, die somit in Pfeilrichtung 29 gegen die Bodenseite des Schüttgutes 3, 3a gerichtet ist und dieses von der Bodenseite abhebt.

Damit ist es mit geringer Luftleistung möglich, bei geöffnetem Auslass 10 den so gebildeten Pfropfen in die restliche Förderleitung 19 zu fördern und über diese in den Zielbehälter 20 zu bringen.

Nachdem der so gebildete Pfropfen den Zielbehälter 20 erreicht hat, baut sich der so in der Förderleitung 19, 19a entstanden Überdruck über dem Zielbehälter 20 ab. Es wird dann wieder die Luft am Lufteinlass 11 und an den Belüftungsrohren 13, 14 abgeschaltet und es erfolgt ein neuer Befüllungszyklus des Längsförderers 1, wie er obenstehend beschrieben wurde.

Wichtig bei der Ausführung des Längsförderers ist, dass keine Rohrförderung im Sinne einer Stetigförderung des Schüttgutes unter entsprechender Reibung des Schüttgutes an der Rohrwandung entsteht, sondern dass die Drehachse 25 der Schneckenwelle 8 einen Versatz 27 zur Mittelachse 26 des Rohrgefäßes 12 aufweist.

Dieser Versatz ist so groß, dass sich ein Hohlraum im Rohrgefäß unterhalb der Schneckenwendel 9 bildet, der nicht der Förderung der Schneckenwelle ausgesetzt ist.

Die Schneckenwendel 9 hat demzufolge nur eine Aufgabe zur Oberflächenverteilung des Schüttgutes im Rohrgefäß, ohne dass eine Längsförderung des Schüttgutes von dem einen Ende in das andere beabsichtigt ist.

Es soll mit dem Längsförderer demgemäss nur eine Längsverteilung, jedoch nicht einem üblichen Sinne entstehender Längstransport des Schüttgutes von dem einen Ende des Rohrgefäßes zu dem andern erfolgen.

Der Versatz 27 zwischen der Drehachse 25 der Schneckenwelle 8 und der Mittelachse 26 des Rohrgefäßes kann in weiten Grenzen veränderbar sein. Wichtig ist nur, dass eben das Schüttgut nicht im Sinne einer herkömmlichen Längsförderung im Rohrgefäß gefördert wird, sondern dass nur eine Verteilung stattfindet.

Es versteht sich von selbst, dass statt des hier angegebenen mechanischen Längsförderers mit Hilfe einer Schneckenwelle und drehfest darauf befestigten Schneckenwendeln 9 auch andere Längsförderer verwendet werden können, die möglichst druckdicht in einem Rohrgefäß 12 eingebaut werden können.

Zu solchen Längsförderern gehören an sich bekannte Längsförderer, wie z. B. Bandförderer, oder auch Blasförderer, wobei mit Hilfe einer Überdruckdüse nur über die Füllkurven 22, 23, 24 in Längsrichtung geblasen wird, um so eine Verteilung des Schüttgutes 3, 3a über den gesamten Bereich des Rohrgefäßes 12 zu erreichen.

Zu derartigen Förderern gehören auch pneumatische Förderer, insbesondere Schrägförderer. Dies sind Förderer, die das Rohrgefäß 12 um etwa 7 Grad in Richtung zum Ausgabeende neigen und als pneumatische Förderer bezeichnet werden.

Es kann also in weiten Grenzen vorgesehen werden, die gleichmäßige Verteilung des Schüttgutes 3, 3a im Rohrgefäß 12 zu erreichen, um so über mechanische und/pneumatische Mittel die gleichmäßig Befüllung des Rohrgefäßes 12 zu ermöglichen.

Die Figur 2 zeigt noch einen Entlüftungsstutzen 21, der bei dem nachfolgend beschriebenen Ausführungsbeispiel eine Rolle spielt.

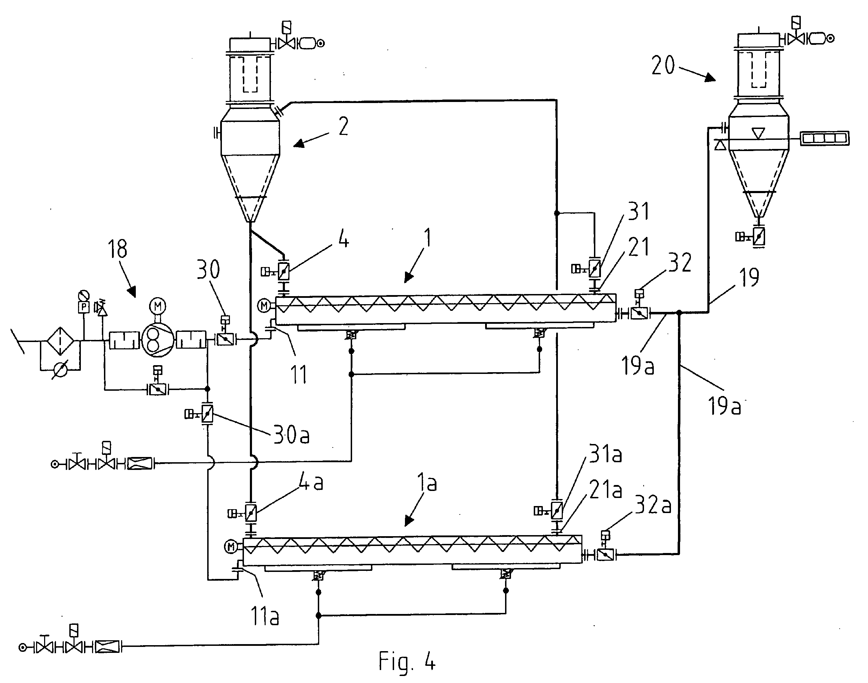

Im Ausführungsbeispiel nach Figur 4 ist eine quasikontinuierliche Förderung mit zwei abwechselnd zueinander betriebenen Längsförderern 1, 1 a vorgesehen. Alle Teile des einen Förderers sind mit einfachen Bezugszeichen, während die gleichen Teile des anderen Verfahrenszweiges mit dem Buchstaben a bezeichnet sind.

Die Figur 4 zeigt, dass entweder nur der eine Längsförderer 1 in Betrieb genommen wird, während aus dem anderen Längsförderer 1 a der bereits schon gebildete Pfropfen ausgetragen wird und umgekehrt, dass der Pfropfen in dem Längsförderer 1 ausgetragen wird und der im Längsförderer 1 a gebildete Pfropfen gebildet wird.

Die jeweils doppelt angeordneten Teilen sind deshalb immer nur abwechselnd in Betrieb. Somit wird ein quasikontinuierlicher Massenstrom in der Förderleitung 19 erreicht, weil die beiden Teilförderleitungen 19a, 19a' ineinander münden und so die Förderleitung 19 abwechselnd auffüllen.

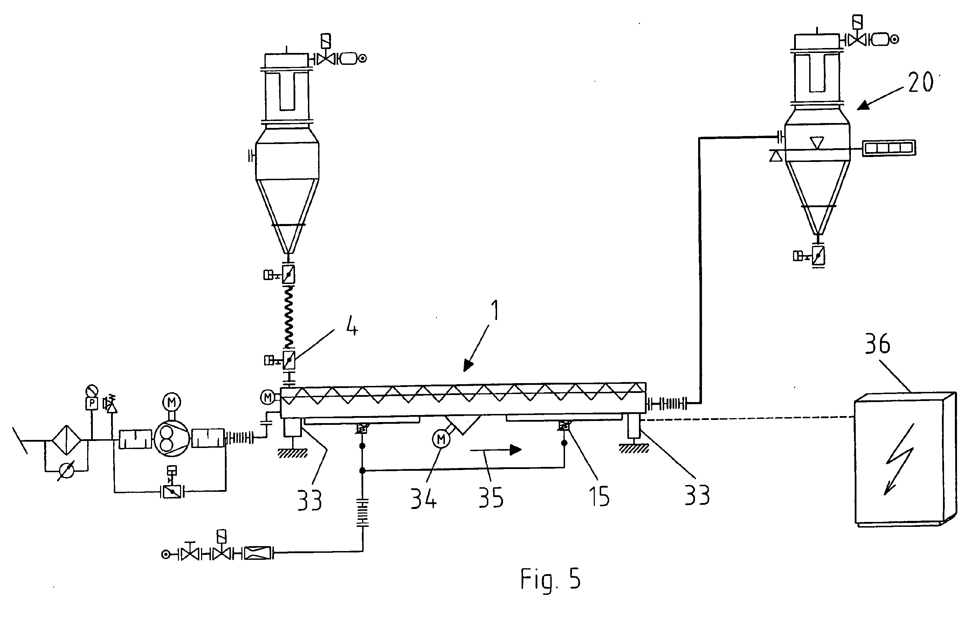

Die Figur 5 zeigt, dass der Längsförderer 1 mit einem Vibrationsförderer kombiniert werden kann. Zu diesem Zweck ist dargestellt, dass der Längsförderer an beiden Enden auf jeweils zugeordneten Schwingelementen 33 gelagert ist und im Mittenbereich ein Vibrationsmotor 34 angeordnet ist, der eine Förderrichtung des Schüttgutes in Pfeilrichtung 35 ermöglicht.

Auf diese Weise wird ebenfalls das gesamte Rohrgefäß gleichmäßig aufgefüllt.

Dieses Ausführungsbeispiel zeigt auch, dass der mechanische Längsförderer 1 mit der Schneckenwelle 8 und der Schneckenwendel 9 auch vollständig entfallen kann und nur ein einziger Vibrationsförderer vorhanden ist.

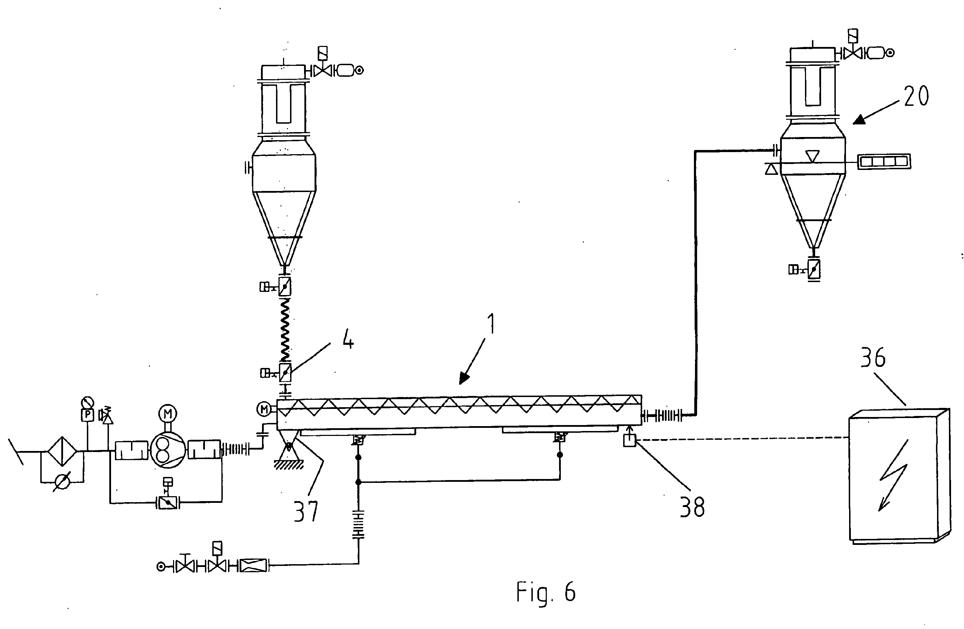

Die Figur 6 zeigt die gesteuerte Befüllung des Rohrgefäßes 12. Dies erfolgt dadurch, dass das Rohrgefäß am einen Ende auf einem Schwenklager 37 angeordnet ist, während das andere, gegenüberliegende Ende auf einer Druckmessdose 38 ruht, der eine entsprechende Steuerung 36 zugeordnet ist.

Entsprechend dem Signal der Druckmessdose 38 kann somit festgestellt werden, wenn die Füllkante 22a an dem Auslass 10 angekommen ist und somit das Rohrgefäß 12 locker mit dem gebildeten Pfropfen aufgefüllt ist.

Es wird noch zur Figur 4 angefügt, dass auch die Luftzuführung für den Austrag des Pfropfens in den Längsförderern 1, 1 a mit entsprechenden Sperrklappen 30, 30a gesteuert werden muss, ebenso wie die Entlüftung, der am Entlüftungsstutzen 21 wiederum entsprechende Absperrklappen 31, 31a zugeordnet sind.

Auch die Auslässe 10 der beiden Längsförderer 1, 1a müssen durch entsprechende Absperrklappen 32, 32a wahlweise, abwechselnd absperrbar sein.

In Figur 3 wird noch angefügt, dass die vorher dargestellten Belüftungsrohre 13, 14 mit entsprechenden in Längsrichtung an der Bodenseite sich erstreckenden Schlitzöffnungen 28 in Pfeilrichtung 29 den Luftstrom in das innere des Rohrgefäßes 12 einblasen.

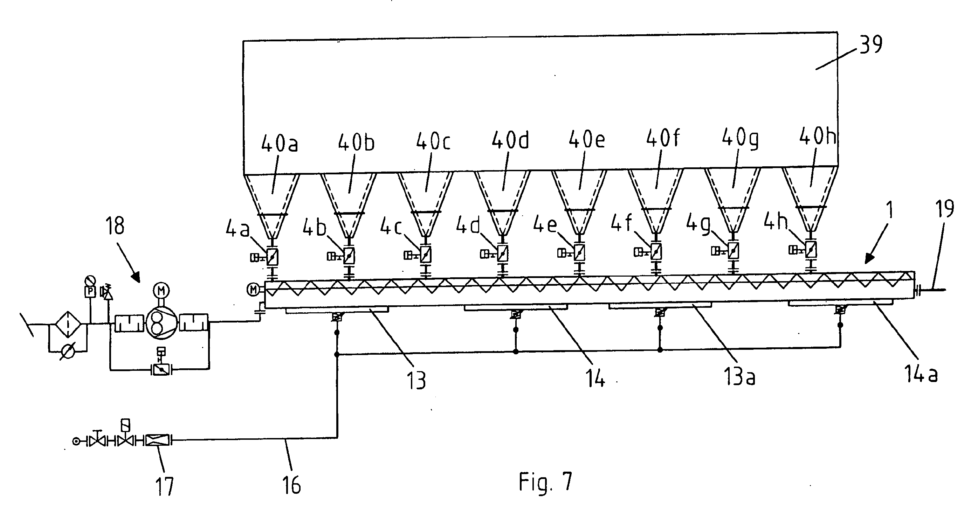

Die Figur 7 zeigt eine industrielle Anlage zur Austragung von Filterstaub aus einem Entstaubungsfilter 39. Aus diesem Ausführungsbeispiel werden die wesentlichen Vorteile der Erfindung deutlich. Es ist dargestellt, dass an der Unterseite des Entstaubungsfilters 39 eine Reihe von parallel zueinander angeordneten Entstaubungstrichtern 40 angeordnet sind, wobei an jedem Entstaubungstrichter 40 jeweils eine Absperrklappe 4 angeordnet ist. Diese Absperrklappen sind mit den Buchstaben a - h bezeichnet. Ebenso sind die Entstaubungstrichter mit dem Buchstaben a - h bezeichnet.

Der Längsförderer 1 kann aus mehreren seriell hintereinander geschalteten und in Transportrichtung miteinander verbundenen einzelnen Längsförderern bestehen, so dass auch an der Bodenseite des so gebildeten, relativ langen Rohrgefäßes 12 eine Vielzahl von Belüftungsrohren 13, 14, 13a, 14a angeordnet sind.

Zur erstmaligen Befüllung des lang ausgebildeten Rohrgefäßes 12 werden über einen kurzen Zeitraum zunächst alle Absperrklappen 4a, 4h geöffnet, bis etwa der Bodenbereich des Rohrgefäßes 12 aufgefüllt ist. Es wird dann die Schnecke 8, 9 eingeschaltet und für einen vorbestimmten Zeitraum werden nun wiederum die Absperrklappen 4a-h geöffnet, um so eine vollständige Befüllung zu ermöglichen und wobei angetriebener Schneckenwelle 8 der Pfropfen nun insgesamt so verschoben wird, dass das gesamte Rohrgefäß 12 locker befüllt ist.

Ist der Pfropfen im Rohrgefäß 12 nun gebildet, wird in der vorher beschriebenen Weise wieder über den Förderluft-Kompressor 18 die Druckluft eingeführt und der Pfropfen in die Förderleitung 19 ausgetragen.

Wichtig bei diesem Ausführungsbeispiel ist auch, dass sich im Bodenbereich des Rohrgefäßes 12 ein Speicherraum 42 bildet, der nicht von der Förderung der Schneckenwelle 9 betroffen ist. Dort ruht das Schüttgut 3 lose und wird zusätzlich noch über die vorher beschriebenen Belüftungsrohre 13, 14 von der Rohrwandung abgehoben. Somit ist eine einfache, reibungsarme Pfropfenbildung im Rohrgefäß 12 möglich. Der Austrag aus dem Rohrgefäß 12 mit dem Förderlust-Kompressor 18 ist deshalb besonders mit geringem Druck möglich.

Vorhin wurde dargestellt, dass die Befüllung des Rohrgefäßes zwecks Pfropfenbildung mittels Gewichtskontrolle erfolgt.

In einer anderen Ausgestaltung der Erfindung ist es vorgesehen, dass eine Zeitschaltung vorhanden ist, so dass diese die Schneckenwelle 8 nur über einen gewissen, vorher bestimmten Zeitraum einschaltet, was ebenfalls sicher stellt, dass das Rohrgefäß 12 gleichmäßig befüllt ist.

Man kann auch entsprechend die Antriebsleistung des Getriebemotors 7 regeln, so dass man entsprechend dem Gegendruck, welcher die Schneckewendel 9 im Schüttgut 3 erfährt, die Drehzahl regelt.

## Patentansprüche

1. Verfahren zur pneumatischen Förderung von Schüttgut (3, 3a), welches in einer Rohrleitung von einem Aufgabeort (2) mittels einer Gasströmung zu einem Empfangsort (20) transportiert wird, wobei das Schüttgut (3, 3a) im Dichtstrom mit einer definierten Geschwindigkeit der Rohrleitung (19) diese teilbefüllt und nach Verschließen der Eintrittsöffnung der Rohrleitung (19) mittels eines Einlaufverschlussventils die Rohrleitung (19) durch Überdruck ganz oder teilentleert und dieser Vorgang durch dauerndes Wiederholen einen quasikontinuierlichen Massenstrom vom Aufgabeort (2) zum Empfangsort (20) aufweist, **dadurch gekennzeichnet, dass** mindestens ein Schüttgutpfropfen in einer Teilstrecke (19a) der Förderleitung (19) mittels eines mechanischen Längsförderers (1, 1 a) gebildet wird.

2. Verfahren nach Anspruch 1, **dadurch gekennzeichnet, dass** die Auffüllung des Längsförderers (1, 1a) zur Bildung eines Schüttgutpfropfens kontinuierlich erfolgt.

3. Verfahren nach den Ansprüchen 1 und 2, **dadurch gekennzeichnet, dass** das Verfahren zur Bildung des Schüttgutpfropfens überwachende Steuerungsvorrichtungen (36) verwendet, welche die kontinuierliche Auffüllung des Rohrgefäßes (12) und/oder die Auffüllung des Pfropfens im Rohrgefäß (12) überwachen.

4. Vorrichtung zur pneumatischen Förderung von Schüttgut (3, 3a), welches in einer Rohrleitung von einem Aufgabeort (2) mittels einer Gasströmung zu einem Empfangsort (20) transportiert wird, wobei das Schüttgut (3, 3a) im Dichtstrom mit einer definierten Geschwindigkeit der Rohrleitung (19) diese teilbefüllt und nach Verschließen der Eintrittsöffnung der Rohrleitung (19) mittels eines Einlaufverschlussventils die Rohrleitung (19) durch Überdruck ganz oder teilentleert und dieser Vorgang durch dauerndes Wiederholen einen quasikontinuierlichen Massenstrom vom Aufgabeort zum Empfangsort aufweist, **dadurch gekennzeichnet, dass** der mechanische Längsförderer (1, 1a) in der Teilstrecke einen Schüttgutpfropfen ausbildet.

5. Vorrichtung nach Anspruch 4, **dadurch gekennzeichnet, dass** Schüttgutpfropfen eine Länge zwischen 5 und 20 Meter aufweist.

6. Vorrichtung nach den Ansprüchen 4 und 5, **dadurch gekennzeichnet, dass** der Längsförderer (1, 1 a) eine Förderschnecke (8, 9) aufweist, welche in Längsrichtung mit einem beträchtlichen Abstand zum Grund der Förderleitung (19) angeordnet ist, wobei sich das Material auf dem Grund der Förderleitung (19) absetzt und das in Längsrichtung beförderte Fördergut mittels des Längsförderers eine zungenförmige Befüllung der Förderleitung (19) aufweist.

7. Vorrichtung nach den Ansprüchen 4 bis 6, **dadurch gekennzeichnet, dass** die zur Längsförderung aufweisende Förderschnecke (8, 9) außermittig zum Förderrohr angebracht ist, wobei die Länge der Förderschnecke (8, 9) einem erwünschten Massenstrom entspricht, der gleich dem wirksamen Rohrvolumen mal Anzahl der Entleertakte pro Stunde ist.

8. Vorrichtung nach den Ansprüchen 4 bis 7, **dadurch gekennzeichnet, dass** die stromab drehende Förderschnecke (8, 9) die Förderleitung (19) vom Zuführpunkt des Schüttgutes (3, 3a) stromabwärts befüllt, wobei das Schüttgut (3, 3a) lediglich eine geringe Reibung an der Rohrwandung aufweist.

9. Vorrichtung nach den Ansprüchen 4 bis 8, **dadurch gekennzeichnet, dass** der Längsförderer (1, 1a) zur Bildung beliebig langer Schüttgutpfropfen Zwischenlager und/oder mindestens zwei hintereinander geschaltete Längsförderer (1, 1a) aufweist.

10. Vorrichtung nach den Ansprüchen 4 bis 9, **dadurch gekennzeichnet, dass** der Längsförderer (1, 1a) an der Bodenseite des Rohrgefäßes (12) des Längsförderers angeordnete Belüftungsrohre (13, 14) aufweist.

11. Vorrichtung nach den Ansprüchen 4 bis 10, **dadurch gekennzeichnet, dass** das Austreiben des Pfropfens aus dem Rohrgefäß (12) in das übrige Teilstück der Förderleitung (19) eine relativ geringe Luftleistung und geringen Überdruck aufweist.

12. Vorrichtung nach den Ansprüchen 4 bis 11, **dadurch gekennzeichnet, dass** das Rohrgefäß (12) des Längsförderers überwachende Steuerungsvorrichtungen (36) aufweist, welche die kontinuierliche Auffüllung des Rohrgefäßes (12) und/oder die Auffüllung des Pfropfens im Rohrgefäß (12) überwachen.

13. Vorrichtung nach den Ansprüchen 4 bis 12 **dadurch gekennzeichnet, dass** die überwachende Steuervorrichtung (36) mittels einer Wiegedose (38) erfolgt, welche am freien schwenkbaren Ende des Längsförderers (1, 1a) angeordnet ist und eine vollständige, lockere Befüllung des Rohrgefäßes (12) überwacht.

14. Vorrichtung nach den Ansprüchen 4 bis 13, **dadurch gekennzeichnet, dass** am Rohrgefäß (12) des Längsförderers (1, 1a) Schwingelemente (33) angeordnet sind und das Rohrgefäß (12) vibrierend mittels Vibrationsmotor (34) in Längsrichtung des Rohrgefäßes (12) angetrieben ist.

15. Vorrichtung nach den Ansprüchen 4 bis 14, **dadurch gekennzeichnet, dass** der Längsförderer (1, 1 a) mehreren gegenseitig beabstandeten Aufgabebehältern (2) und in einem großem Abstand zu diesen nachgeschaltet ist, wobei Absperrklappen (4a bis 4h) der Entstaubungstrichter (40a bis 40h), welche am Entstaubungsfilter (39) der Aufgabebehälter (2) angeordnet sind das Rohrgefäßes (12) des Längsförderers (1, 1a) gezielt befüllen.

16. Vorrichtung nach einem der Ansprüche 4 bis 15, **dadurch gekennzeichnet, dass** sie zum Ausüben des Verfahrens nach einem der Ansprüche 1 bis 3 geeignet ist.

## Claims

1. Method for pneumatically conveying bulk material (3, 3a), which is transported in a pipeline from a feeding site (2) to a receiving site (20) by means of a gas flow, the bulk material (3, 3a) partially filling the pipeline in the dense flow at a defined speed of the pipeline (19), and after closing the inlet opening of the pipeline (19) by means of an inlet closing valve, the pipeline (19) is completely or partially emptied by excess pressure and this process, by continuous repetition, has a virtually continuous mass flow from the feeding site (2) to the receiving site (20), **characterised in that** at least one bulk material plug is formed in a part section (19a) of the conveying line (19) by means of a mechanical longitudinal conveyor (1, 1a).

2. Method according to claim 1, **characterised in that** the filling of the longitudinal conveyor (1, 1 a) to form a bulk material plug takes place continuously.

3. Method according to claims 1 and 2, **characterised in that** the method for forming the bulk material plug uses monitoring control devices (36), which monitor the continuous filling of the pipe vessel (12) and/or the filling of the plug in the pipe vessel (12).

4. Device for pneumatically conveying bulk material (3, 3a), which is transported in a pipeline from a feeding site (2) to a receiving site (20) by means of a gas flow, the bulk material (3, 3a) partially filling the pipeline in the dense flow at a defined speed of the pipeline (19), and after closing the inlet opening of the pipeline (19) by means of an inlet closing valve, the pipeline (19) is completely or partially emptied by excess pressure and this process, by continuous repetition, has a virtually continuous mass flow from the feeding site to the receiving site, **characterised in that** the mechanical longitudinal conveyor (1, 1a) in the part section forms a bulk material plug.

5. Device according to claim 4, **characterised in that** the bulk material plug has a length of between 5 and 20 metres.

6. Device according to claims 4 and 5, **characterised in that** the longitudinal conveyor (1, 1 a) has a screw conveyor (8, 9), which is arranged in the longitudinal direction with a considerable spacing from the base of the conveying line (19), wherein the material deposits on the base of the conveying line (19) and the bulk material conveyed in the longitudinal direction by means of the longitudinal conveyor has a tongue-shaped filling of the conveying line (19).

7. Device according to claims 4 to 6, **characterised in that** the screw conveyor (8, 9) for longitudinal conveyance is attached eccentrically with respect to the conveying pipe, the length of the screw conveyor (8, 9) corresponding to a desired mass flow, which equals the effective pipe volume times the number of emptying cycles per hour.

8. Device according to claims 4 to 7, **characterised in that** the screw conveyor (8, 9) rotating downstream fills the conveying line (19) downstream from the supply point of the bulk material (3, 3a), the bulk material (3, 3a) merely having low friction on the pipe wall.

9. Device according to claims 4 to 8, **characterised in that** the longitudinal conveyor (1, 1 a), to form bulk material plugs of any length, has intermediate stores and/or at least two longitudinal conveyors (1, 1a) connected one behind the other.

10. Device according to claims 4 to 9, **characterised in that** the longitudinal conveyor (1, 1a) has ventilation pipes (13, 14) arranged on the base side of the pipe vessel (12) of the longitudinal conveyor.

11. Device according to claims 4 to 10, **characterised in that** the driving out of the plug out of the pipe vessel (12) into the remaining part piece of the conveying line (19) has a relatively low air power and low excess pressure.

12. Device according to claims 4 to 11, **characterised in that** the pipe vessel (12) of the longitudinal conveyor has monitoring control devices (36), which monitor the continuous filling of the pipe vessel (12) and/or the filling of the plug in the pipe vessel (12).

13. Device according to claims 4 to 12, **characterised in that** the monitoring control device (36) is implemented by means of a weighing can (38), which is arranged at the free pivotable end of the longitudinal conveyor (1, 1 a) and monitors a complete, loose filling of the pipe vessel (12).

14. Device according to claims 4 to 13, **characterised in that** oscillating elements (33) are arranged on the pipe vessel (12) of the longitudinal conveyor (1, 1 a) and the pipe vessel (12) is driven in a vibrating manner by means of a vibration motor (34) in the longitudinal direction of the pipe vessel (12).

15. Device according to claims 4 to 14, **characterised in that** the longitudinal conveyor (1, 1 a) is connected downstream of, and at a large spacing from, a plurality of mutually spaced apart feed containers (2), blocking flaps (4a to 4h) of the dust removal funnels (40a to 40h), which are arranged on the dust removal filter (39) of the feed containers (2), filling the pipe vessel (12) of the longitudinal conveyor (1, 1 a) in a targeted manner.

16. Device according to any one of claims 4 to 15, **characterised in that** it is suitable for implementing the method according to any one of claims 1 to 3.

## Revendications

1. Procédé pour le transport pneumatique d'un produit en vrac (3, 3a) qui est amené à l'aide d'un courant de gaz, dans une conduite, d'un endroit de chargement (2) à un endroit de réception (20), le produit en vrac (3, 3a) remplissant en partie la conduite (19) en un courant dense à une vitesse définie puis, après la fermeture de l'ouverture d'entrée de la conduite (19) à l'aide d'une soupape de fermeture d'entrée, évacuant entièrement ou partiellement ladite conduite (19) grâce à une surpression, et cette opération présentant, du fait qu'elle se répète continuellement, un flux massique quasi continu de l'endroit de chargement (2) jusqu'à l'endroit de réception (20), **caractérisé en ce qu'**au moins un bouchon de produit en vrac est formé dans un tronçon (19a) de la conduite transporteuse (19) à l'aide d'un transporteur longitudinal mécanique (1, 1a).

2. Procédé selon la revendication 1, **caractérisé en ce que** le remplissage du transporteur longitudinal (1, 1a) pour former un bouchon de produit en vrac se fait en continu.

3. Procédé selon les revendications 1 et 2, **caractérisé en ce qu'**il utilise pour former un bouchon de produit en vrac des dispositifs de commande de surveillance (3) qui surveillent le remplissage continu du récipient tubulaire (12) et/ou la formation du bouchon dans celui-ci.

4. Dispositif pour le transport pneumatique d'un produit en vrac (3, 3a) qui est amené à l'aide d'un courant de gaz, dans une conduite, d'un endroit de chargement (2) à un endroit de réception (20), le produit en vrac (3, 3a) remplissant en partie la conduite (19) en un courant dense à une vitesse définie puis, après la fermeture de l'ouverture d'entrée de la conduite (19) à l'aide d'une soupape de fermeture d'entrée, évacuant entièrement ou partiellement ladite conduite (19) grâce à une surpression, et cette opération présentant, du fait qu'elle se répète continuellement, un courant quasi continu de l'endroit de chargement jusqu'à l'endroit de réception, **caractérisé en ce que** le transporteur longitudinal mécanique (1, 1a) forme dans le tronçon un bouchon de produit en vrac.

5. Dispositif selon la revendication 4, **caractérisé en ce que** le bouchon de produit en vrac présente une longueur située entre 5 et 20 mètres.

6. Dispositif selon les revendications 4 et 5, **caractérisé en ce que** le transporteur longitudinal (1, 1a) comporte une vis sans fin (8, 9) qui est disposée dans le sens longitudinal, à une grande distance du fond de la conduite transporteuse (19), la matière se déposant sur le fond de la conduite (19) et le produit transporté dans le sens longitudinal présentant grâce au transporteur longitudinal un remplissage en forme de langue de ladite conduite (19).

7. Dispositif selon les revendications 4 à 6, **caractérisé en ce que** la vis transporteuse (8, 9) utilisée pour le transport longitudinal est installée de manière excentrée par rapport à la conduite transporteuse, la longueur de ladite vis transporteuse (8, 9) correspondant à un flux massique souhaité qui est égal au volume de conduite effectif multiplié par le nombre de cycles d'évacuation par heure.

8. Dispositif selon les revendications 4 à 7, **caractérisé en ce que** la vis transporteuse (8, 9) qui tourne vers l'aval remplit la conduite transporteuse (19) du point d'amenée du produit en vrac (3, 3a) vers l'aval, le produit en vrac (3, 3a) présentant seulement une faible friction contre la paroi de la conduite.

9. Dispositif selon les revendications 4 à 8, **caractérisé en ce que** le transporteur longitudinal (1, 1a) comporte, pour former des bouchons de produit en vrac de n'importe quelle longueur, des paliers intermédiaires et/ou au moins deux transporteurs longitudinaux (1, 1a) montés l'un derrière l'autre.

10. Dispositif selon les revendications 4 à 9, **caractérisé en ce que** le transporteur longitudinal (1, 1a) présente des tuyaux d'aération (13, 14) qui sont disposés sur le côté du fond du récipient tubulaire (12) dudit transporteur.

11. Dispositif selon les revendications 4 à 10, **caractérisé en ce que** l'expulsion du bouchon du récipient tubulaire (12) vers le reste de la conduite transporteuse (19) présente un débit d'air relativement faible et une surpression faible.

12. Dispositif selon les revendications 4 à 11, **caractérisé en ce que** le récipient tubulaire (12) du transporteur longitudinal comporte des dispositifs de commande de surveillance (36) qui surveillent le remplissage continu du récipient tubulaire (12) et/ou la formation du bouchon dans celui-ci.

13. Dispositif selon les revendications 4 à 12, **caractérisé en ce que** le dispositif de commande de surveillance (36) utilise un dispositif de pesage (38) qui est disposé sur l'extrémité pivotante libre du transporteur longitudinal (1, 1a) et qui surveille un remplissage entier et peu compact du récipient tubulaire (12).

14. Dispositif selon les revendications 4 à 13, **caractérisé en ce que** des éléments vibrants (33) sont disposés sur le récipient tubulaire (12) du transporteur longitudinal (1, 1a), et le récipient tubulaire (12) est entraîné de manière vibrante à l'aide d'un moteur vibrateur (34) dans le sens longitudinal dudit récipient (12).

15. Dispositif selon les revendications 4 à 14, **caractérisé en ce que** le transporteur longitudinal (1, 1a) est monté en aval de plusieurs récipients de chargement (2) espacés les uns des autres, et à une grande distance de ceux-ci, des clapets de fermeture (4a à 4h) des trémies de dépoussiérage (40a à 40h) qui sont disposées sur le filtre de dépoussiérage (39) des récipients de chargement (2) remplissant de manière ciblée le récipient tubulaire (12) du transporteur longitudinal (1, 1a).

16. Dispositif selon l'une des revendications 4 à 15, **caractérisé en ce qu'**il est apte à mettre en oeuvre le procédé selon l'une des revendications 1 à 3.
